# FASCICULE DE BREVET EUROPEEN

(11) **EP 2 828 610 B1**
(45) Date de publication et mention de la délivrance du brevet: **16.05.2018**
(21) Numéro de dépôt: 13716341.6
(22) Date de dépôt: 14.03.2013
(51) Int. Cl.: G01B 5/00, G01N 15/14

(54) **DISPOSITIF DE POSITIONNEMENT D'UN OBJET DANS L'ESPACE**
VORRICHTUNG ZUR POSITIONIERUNG EINES GEGENSTANDES IM RAUM
DEVICE FOR POSITIONING AN OBJECT IN SPACE

(30) Priorité: 22.03.2012 FR 1252584
(43) Date de publication de la demande: 28.01.2015
(73) Titulaire: Horiba ABX SAS, 34184 Montpellier cedex 4 (FR)
(72) Inventeur: HENON, Nathalie, F-30730 Fons (FR)
(74) Mandataire: Santarelli
(86) Numéro de dépôt international: PCT/FR2013/050533
(87) Numéro de publication internationale: WO 2013/140068

(56) Documents cités:
- GB-A- 550 415
- US-A- 3 046 006
- US-A- 3 720 849
- US-B1- 6 174 102

## Description

L'invention se place dans le domaine des dispositifs de positionnement d'un objet dans l'espace, plus précisément dans le domaine des dispositifs de positionnement ultra précis ou micrométriques d'un objet dans l'espace, particulièrement ceux utilisés dans des appareils de mesure comme ceux par exemple utilisés en cytométrie en flux.

La cytométrie en flux est une technique permettant de faire défiler à grande vitesse des particules, molécules ou cellules, transportées par un fluide transporteur jusqu'à une source d'excitation lumineuse par exemple un faisceau lumineux, avantageusement le faisceau d'un laser. Cette technique permet de trier et/ou de compter et/ou de caractériser lesdites particules, molécules ou cellules de manière individuelle, quantitative et/ou qualitative notamment par l'analyse des signaux optiques et/ou physiques émis par lesdites particules, molécules ou cellules coupant ladite source d'excitation lumineuse.

Par le principe de focalisation hydrodynamique du fluide transporteur, lesdites particules, molécules ou cellules à analyser sont placées en file indienne dans ledit fluide transporteur et conduites jusqu'à la source d'excitation lumineuse. Selon ce principe, un liquide de gainage canalise ledit fluide transporteur, l'ensemble s'écoulant sous la forme d'un flux laminaire garantissant le non mélange dudit fluide transporteur et dudit liquide de gainage. On comprend donc que les dimensions dudit fluide transporteur sont extrêmement minimes.

Il en est en général de même pour les dimensions du faisceau de ladite source d'excitation lumineuse.

Hors la méthode ne vaut que si ledit faisceau de ladite source d'excitation lumineuse rencontre lesdites particules, molécules ou cellules à analyser.

Il est donc absolument impératif que le positionnement dans l'espace de ladite source d'excitation lumineuse et dudit fluide transporteur soit le plus précis possible afin que le point de convergence entre les deux soit le plus fin possible.

De même il est nécessaire qu'aucune variation intempestive du positionnement ne puisse survenir au cours des réglages et/ou de la mesure.

En général dans les appareils de cytométrie, la position dudit fluide transporteur est fixée et c'est la source d'excitation lumineuse qui sera sujette à déplacement afin que le rayonnement qu'elle produit soit positionné très précisément au centre du flux de fluide transporteur.

Le dispositif selon l'invention lorsqu'utilisé dans les appareils de cytométrie est donc plus particulièrement destiné à positionner la source d'excitation lumineuse (en général un rayon laser) par rapport au flux de fluide porteur.

Des dispositifs de positionnement d'un objet dans l'espace sont connus de l'art antérieur. Par exemple, le document US 6,174,102 B1 décrit un dispositif de positionnement d'un objet dans l'espace comprenant plusieurs plateaux aptes à se déplacer l'un par rapport à l'autre selon l'un des trois axes de l'espace, lesdits déplacements étant guidés chacun par un ensemble tenon/mortaise. Cependant, sans mettre en doute leurs qualités, ces dispositifs ne sont pas totalement adaptés à l'usage que voulait en faire la Demanderesse dans des appareils de mesure, particulièrement micrométrique, très particulièrement ceux utilisés en cytométrie en flux.

Ainsi la Demanderesse s'est vue confrontée à différents problèmes qu'elle a cherché à résoudre par la présente invention.

En effet la Demanderesse s'est vue devoir assurer un positionnement au centième de millimètres dans les 3 axes de l'espace tout en limitant au centième de millimètre les jeux de fonctionnement et assurer le maintien le plus absolu possible de l'ensemble dans la position définie par l'opérateur lors des réglages.

Mais il fallait également comme dans tous les dispositifs de ce type conserver une fonction de rattrapage des variations fortuites de déplacement, c'est-à-dire le rattrapage du jeu fonctionnel lié au mouvement, rôle habituellement joué dans les dispositifs connus de l'art antérieur par des ressorts ou des billes.

Il fallait de plus assurer une grande stabilité dimensionnelle de l'ensemble dudit dispositif en cas de variation de température et ainsi réduire au maximum les variations de dimensions liées aux phénomènes de dilatation/contraction (dilatation différentielle) induits par les variations de températures.

Il fallait enfin s'assurer d'une compacité maximale de l'ensemble du dispositif, garantir à l'utilisateur une grande précision du déplacement dans chacun des trois axes de l'espace, une sensibilité maximale pour l'utilisateur et une course très précise.

Par précision du déplacement on entend que le dispositif selon l'invention doit garantir à l'utilisateur que lorsqu'il répète un mouvement donné prédéfini sur un moyen de déplacement de l'un des éléments dudit dispositif selon l'invention, il obtient un résultat toujours identique. Dans le cas particulier de l'invention l'action de l'utilisateur par exemple une rotation de 10° (sensibilité maximale généralement admise par l'Homme du métier dans un sens ou dans l'autre) sur un des moyens de déplacement de l'un des éléments dudit dispositif selon l'invention (par exemple une vis micrométrique) doit garantir un déplacement dudit élément compris entre 0,1 et 100 µm, préférentiellement, 2 et 50 µm, très préférentiellement de 5 µm.

Par sensibilité maximale pour l'utilisateur, on entend selon l'invention que lorsqu'il intervient sur l'un des moyens de déplacement de l'un des éléments dudit dispositif selon l'invention (par exemple une vis), l'opérateur doit pouvoir ressentir un déplacement de 10 µm.

Par course on entend selon l'invention l'amplitude maximale de mouvement disponible sur le système pour positionner l'objet dans l'espace, par exemple pour cibler le tir d'un laser dans le cas de mesures en cytométrie. Par exemple ladite course dans chaque axe peut être comprise entre 0 et 10 mm, c'est-à-dire +/- 5 mm de part et d'autre de la position cible, avantageusement entre 0 et 6 mm c'est-à-dire +/- 3 mm de part et d'autre de la position cible.

La solution proposée par la Demanderesse réside en un dispositif de positionnement micrométrique d'un objet dans l'espace comprenant seulement 4 plateaux chacun apte à se déplacer par rapport à un autre qui lui est contigu sans autres pièces intermédiaires, ledit dispositif étant exempt de tout système de rattrapage des variations fortuites de déplacement sous forme de ressorts ou de billes, comme cela est dans les dispositifs de positionnement micrométriques d'un objet dans l'espace connus de l'art antérieur.

Le nombre réduit de plateaux formant le dispositif (4 plateaux) vise à résoudre le problème de la compacité du dispositif.

L'absence de ressort résout aussi en partie le problème de la stabilité dimensionnelle de l'ensemble dudit dispositif en cas de variation de température, les ressorts ne pouvant être dans la même matière que les plateaux ce qui en cas de variation de température aurait pu engendrer des différences de dilatation/contraction préjudiciable à la stabilité dimensionnelle de l'ensemble du dispositif, surtout dans un dispositif micrométrique.

Selon l'invention la fonction de rattrapage des variations fortuites de déplacement est assurée par la combinaison d'une précontrainte latérale exercée sur le moyen de guidage du déplacement d'un plateau l'un par rapport à l'autre et de l'utilisation d'une vis micrométrique destinée à assurer le déplacement d'un plateau par rapport à un autre lorsqu'on lui applique un mouvement de rotation, ladite vis micrométrique étant fixée en prise directe sur le plateau dont elle doit assurer le déplacement.

Ainsi l'invention a pour objet un dispositif de positionnement d'un objet dans l'espace comprenant au moins

4 plateaux (T1, T2, T3, T4), chacun apte à se déplacer par rapport à un autre desdits plateaux qui lui est contigu selon l'un des 3 axes de l'espace, le déplacement d'un plateau par rapport à un autre plateau pouvant être guidé par un ensemble tenon/mortaise dans lequel ledit tenon peut être solidaire de l'un des plateaux et sa mortaise pouvant être confectionnée dans l'autre plateau, l'orientation dans l'espace de chacun des ensembles tenon/mortaise étant différente des 2 autres et selon l'un des 3 axes de l'espace
caractérisé en ce que
▪ Ledit dispositif est exempt de tout ressort de rattrapage
▪ Au moins l'un des ensembles tenon/mortaise peut être sous la forme de queue d'aronde ;
▪ Une précontrainte visant à limiter le déplacement d'un plateau par rapport à un autre est appliquée latéralement sur l'un des bords du tenon de l'ensemble tenon/mortaise, ladite précontrainte limitant mais n'empêchant pas le déplacement desdits plateaux l'un par rapport à l'autre ;
▪ le déplacement d'au moins un plateau par rapport à un autre plateau peut être assuré par l'intermédiaire d'au moins une vis micrométrique pouvant agir au moins sur l'un des deux plateaux devant être déplacés l'un par rapport à l'autre, ladite vis micrométrique pouvant être solidaire de l'un desdits deux plateaux, ladite vis micrométrique pouvant être fixée en prise directe sur ledit plateau ;
▪ Le blocage d'un plateau par rapport à un autre plateau dans la position recherchée peut être assuré, indépendamment pour chacun des ensembles tenon /mortaise, par au moins un moyen de blocage.

Par fixée en prise directe sur le plateau dont elle doit assurer le déplacement on entend que la vis micrométrique est rendue solidaire sans jeu du plateau dont elle assure le déplacement par un moyen qui tout en assurant la solidarité entre la vis et le plateau, laisse la vis micrométrique libre de mouvement de rotation. Selon l'invention, ledit moyen consiste en une bague de forme cylindrique enchâssée en force sur l'une des extrémités de ladite vis micrométrique, avantageusement par un montage sous presse, présentant un corps de diamètre donné et une base solidaire dudit corps présentant un diamètre donné supérieur à celui dudit corps, formant ainsi une collerette autour dudit corps. Avantageusement la bague est une seule pièce fraisée, le corps et la collerette étant ainsi une seule et même pièce.

Ladite collerette est destinée à se loger dans un évidement circulaire de même diamètre et de profondeur égale à l'épaisseur de ladite collerette, confectionné dans le plateau à guider. Lorsque ladite collerette est positionnée dans l'évidement du plateau, l'ensemble bague/vis micrométrique est rendu solidaire dudit plateau au moyen d'une plaquette de toute forme, avantageusement rectangulaire, présentant un orifice de diamètre correspondant au diamètre extérieur du corps de la bague au travers duquel passe ledit corps de la bague, ladite plaquette étant fixée au dit plateau que la vis micrométrique doit déplacer. Tout moyen de fixation de ladite plaquette au dit plateau peut être utilisé selon l'invention, préférentiellement ladite plaquette pourra être fixée au dit plateau au moyen d'une vis, avantageusement 2, chacune située de part et d'autre de l'orifice au travers duquel passe le corps de la bague.

On comprend que la vis micrométrique et la bague, solidaires, tournent ensemble. On comprend aussi que l'ensemble bague/plaquette limite le jeu longitudinal non désiré de ladite vis micrométrique.

Selon l'invention, la vis micrométrique pourra être telle que la rotation d'un tour complet de sa tête pourra déplacer son extrémité d'une distance comprise entre 0 et 1000 µm, préférentiellement, entre 0 et 500 µm, très préférentiellement de 200 µm.

On a aussi compris de ce qui précède que deux plateaux contigus peuvent se déplacer l'une par rapport à l'autre. Pour cela les deux plateaux sont reliés l'un à l'autre par un ensemble tenon/mortaise, ledit tenon étant partie intégrante de l'un des plateaux, ladite mortaise étant partie intégrante de l'autre plateau. On peut envisager que ledit tenon soit une pièce indépendante rapportée sur le plateau. Mais il est bien plus avantageux que ledit plateau soit en fait une seule pièce usinée, par exemple par fraisage, afin de confectionner ledit tenon.

On comprend aussi que la partie mortaise de l'ensemble tenon/mortaise peut être usiné, avantageusement fraisé, dans le plateau.

Comme indiqué précédemment au moins un des ensembles tenon/mortaise est sous la forme de queue d'aronde. Selon une variante de l'invention, 2 des ensemble(s) tenon/mortaise, mais très préférentiellement les 3, peuvent être sous la forme de queue d'aronde.

Selon l'invention les dimensions de l'ensemble tenon/mortaise dépendront des dimensions générales du dispositif et l'Homme du métier n'aura aucun mal à les définir. Cependant le guidage et la rectitude des déplacements des tenons étant assurés par au moins l'un des bords des mortaises, avantageusement les deux, il pourra être avantageux que l'ensemble tenon/mortaise soit d'une longueur la plus grande possible. Cela permet en outre une meilleure répartition des forces, particulièrement celles de précontrainte et/ou de blocage. Avantageusement selon l'invention l'ensemble tenon/mortaise peut être d'une longueur équivalente à la longueur du plateau dans laquelle la mortaise est fraisée.

On comprend aussi que le déplacement d'un plateau par rapport à un autre peut être limité sans être empêché par application d'une précontrainte sur le tenon de l'ensemble tenon/mortaise liant lesdits 2 plateaux.

Ladite précontrainte, avantageusement réglée au moment de l'assemblage dudit dispositif selon l'invention, peut être obtenue selon l'invention par un moyen de précontrainte qui, dans un ensemble tenon/mortaise, va limiter le déplacement dudit tenon dans sa mortaise, sans pour autant bloquer le déplacement dudit tenon dans ladite mortaise.

Il est évident que selon l'invention, un, plusieurs ou tous les ensembles tenon/mortaise peuvent comprendre ledit moyen de contrainte. Avantageusement selon l'invention, tous les ensembles tenon/mortaise peuvent comprendre ledit moyen de précontrainte.

Selon l'invention, ledit moyen de précontrainte devant précontraindre le déplacement d'un tenon dans sa mortaise pourra être positionné tangentiellement au dit tenon, selon la plus grande longueur dudit tenon.

Selon l'invention, ledit moyen de précontrainte pourra être l'un des bords de ladite mortaise.

Le déplacement d'un plateau par rapport à un autre étant guidé par un ensemble tenon/mortaise, les parois de ladite mortaise jouent le rôle de guide pour le déplacement dudit tenon. Selon l'invention la mortaise est avantageusement fraisée dans la masse du plateau. Avantageusement l'une desdites parois de ladite mortaise est alors fraisée sous la forme d'une lame présentant une certaine élasticité latérale ladite lame étant solidaire du plateau dans laquelle la mortaise dont elle forme un des bords est fraisée. Par élasticité latérale on entend que si l'on applique une force latéralement à ladite lame donc perpendiculairement au sens du guidage joué par ladite lame, ladite lame est apte à se déplacer latéralement sans se désolidariser du plateau, donc à prendre une inclinaison par rapport à sa base. On comprend que lorsque l'on applique ladite force, ladite lame s'incline et vient au contact de la paroi du tenon qu'elle guide.

Selon l'invention ladite lame joue un double rôle : en premier lieu elle permet d'appliquer ladite précontrainte visant à limiter sans le supprimer le déplacement d'un tenon dans sa mortaise et d'autre part à bloquer les deux plateaux contigus lorsque la position recherchée de l'un des plateaux par rapport à l'autre est atteinte.

On comprend donc que le dispositif pourra comprendre d'une part un moyen pour exercer ladite force de précontrainte sur ladite lame, avantageusement au moins une vis par ailleurs appelée vis de précontrainte, positionnée perpendiculairement à l'axe de déplacement dudit ensemble tenon/mortaise sur lequel ladite précontrainte doit être exercée, et d'autre part un moyen de blocage de la position d'un plateau par rapport à un autre, avantageusement au moins une vis par ailleurs appelée vis de blocage, également positionnée perpendiculairement à l'axe de déplacement dudit ensemble tenon/mortaise sur lequel le blocage doit être exercé.

Avantageusement selon l'invention le dispositif pourra comprendre 2 vis de précontrainte et une vis de blocage. Les vis de précontrainte et la vis de blocage agissant sur une même lame, une disposition avantageuse selon l'invention veut que les deux vis de précontrainte pourront être situées de chaque côté de la vis de blocage. On comprend que selon l'invention chaque ensemble tenon/mortaise pourra comprendre un ensemble de vis de précontrainte et de vis de blocage.

Un des avantages du moyen de précontrainte/blocage selon l'invention est que comme ladite lame exerçant la précontrainte ou le blocage sur le tenon s'étend sur la totalité de la longueur de la mortaise, la force de contrainte et/ou de blocage appliquée s'exercera alors sur toute la longueur du tenon auquel elle est appliquée ce qui assure une meilleure répartition des forces exercées. Un autre avantage est que comme ladite lame est obtenue par usinage du plateau elle se trouve être dans la même matière que ledit plateau ce qui participe à la résolution du problème de la stabilité dimensionnelle de l'ensemble dudit dispositif en cas de variation de température le plateau et ladite lame étant dans la même matière.

Par plateau on entend selon l'invention une pièce dont le volume est défini par une longueur, une largeur et une hauteur, dont la largeur et la longueur définissent une forme qui peut être un cercle ou un polygone, avantageusement un carré, un rectangle, un triangle et dont au moins 2 faces parallèles sont planes. Avantageusement selon l'invention le plateau sera un parallélépipède carré, rectangle ou rhombohédrique. Selon l'invention les 4 plateaux peuvent être de formes différentes. Avantageusement les 4 plateaux pourront être de même forme et/ou de même dimension. Très avantageusement les 4 plateaux du dispositif selon l'invention pourront être un parallélépipède rectangle dont la plus grande surface pourra être carrée. En outre selon l'invention, lesdits plateaux, simultanément ou indépendamment peuvent comporter des moyens de fixation destinés à solidariser auxdits plateaux tout objet que le dispositif selon l'invention va permettre de positionner dans l'espace.

Selon l'invention 3 des 4 plateaux du dispositif pourront être empilés l'un sur l'autre par leurs faces planes, le quatrième pouvant être positionné sur l'une des 2 autres faces du volume défini par l'empilement des 3 autres plateaux. On comprend que ce quatrième plateau pourra comprendre une mortaise orientée selon un axe parallèle à l'axe d'empilement des 3 autres plateaux ce qui permettra grâce à un tenon porté par l'un des 3 autres plateaux empilés et destinés à venir s'emboiter dans ladite mortaise, de déplacer l'ensemble des 3 plateaux empilés selon l'axe défini par la mortaise portée par ledit quatrième plateau.

Selon l'invention, les plateaux pourront être en toute matière compatible avec l'utilisation prévue du dispositif. Préférentiellement selon l'invention la matière pourra être une matière la plus inerte possible devant des variations de température. Par exemple ils pourront être confectionnés en aluminium, acier, avantageusement inoxydable, laiton, plastique dur. Les termes aluminium, acier, laiton, plastique dur, sont ici employés comme termes génériques désignant chacun une famille de produits mis à disposition par les fabricants et dans lesquelles l'Homme du métier n'aura aucun mal à choisir le produit le plus adapté à la fabrication du dispositif selon l'invention selon les contraintes de fabrication qu'il pourra rencontrer.

Avantageusement selon l'invention le matériau utilisé en majorité sera l'aluminium.

De même si l'on peut envisager que les plateaux soient confectionnés dans des matières différentes, il pourra être avantageux que les 4 plateaux du dispositif soient confectionnés dans la même matière. C'est la variante préférée selon l'invention.

Selon l'invention les tenons peuvent également être confectionnés en toute matière compatible avec l'utilisation prévue du dispositif. De même si l'on peut envisager que les différents tenons soient confectionnés dans des matières différentes, il pourra être avantageux que tous les tenons du dispositif soient confectionnés dans la même matière et encore plus avantageux que cette matière soit la même que celle dans laquelle peuvent être confectionnés lesdits plateaux. Avantageusement chaque plateau étant usiné pour obtenir sa forme définitive, le tenon de chaque plateau sera dans la même matière que ledit plateau.

En fait le maximum de pièces constituant le dispositif selon l'invention pourra être confectionné dans la même matière, avantageusement en aluminium, cela pour participer de la résolution du problème de la stabilité dimensionnelle de l'ensemble dudit dispositif en cas de variation de température le plateau et ladite lame étant dans la même matière. Selon une variante particulièrement avantageuse et préférée de l'invention seules les vis (micrométriques, à pas différentiel ou autres) ne seront pas dans la même matière que les autres pièces (plateaux, collerettes, plaquettes). Le dispositif étant alors monomatière cette forme de réalisation garantie une très grande stabilité de l'ensemble dudit dispositif en cas de variation de température.

Les dimensions du dispositif et/ou de chaque pièce dudit dispositif ne sont pas en elles-mêmes une caractéristique essentielle de l'invention. En effet le dispositif selon l'invention est destiné à être utilisé dans un appareillage qui lui-même introduira une contrainte quant aux dimensions dudit dispositif selon l'invention. L'Homme du métier saura parfaitement et sans difficulté adapter les dimensions des différentes pièces dudit dispositif selon l'invention pour que celui-ci ait les dimensions souhaitées pour son utilisation dans tel ou tel appareillage.

Des objets, caractéristiques et avantages de l'invention ressortent de la description qui suit, donnée à titre illustratif et non limitatif en regard des dessins annexés sur lesquels :
La figure 1 montre une vue en trois dimensions d'une variante d'un dispositif selon l'invention.
La figure 2 montre une vue latérale d'une variante d'un dispositif selon l'invention.
La figure 3 montre en A une coupe d'un dispositif selon l'invention et en B un agrandissement du moyen de blocage et du moyen de déplacement d'un des plateaux dudit dispositif.
La figure 4 montre une coupe d'un plateau ;
La figure 5 montre une vue éclatée en 3 dimensions du montage de l'ensemble vis micrométrique/collerette/plaquette sur un plateau qui assure la fixation en prise directe de ladite vis micrométrique au dit plateau.

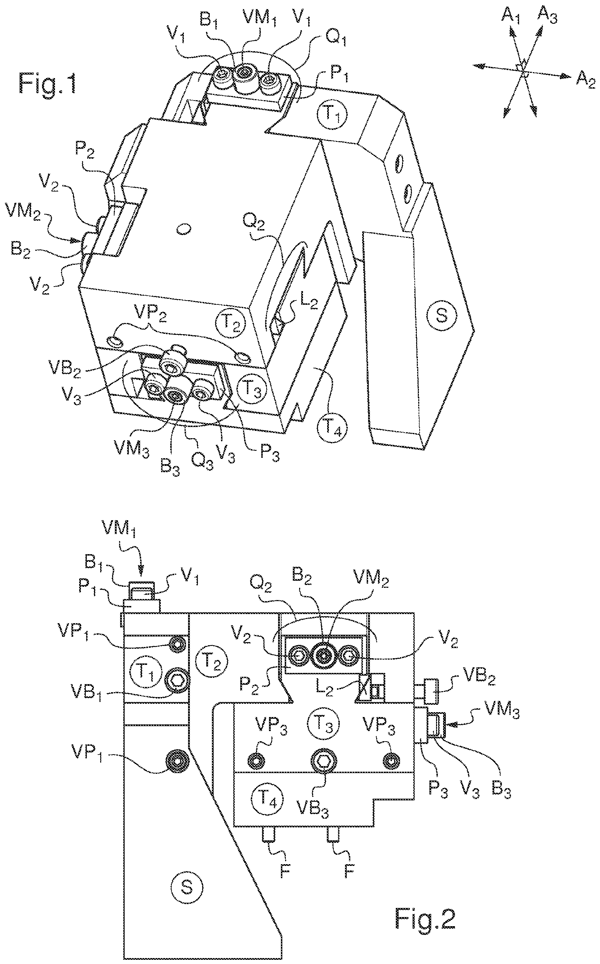

La figure 1 représente une vue en 3 dimensions d'une variante du dispositif selon l'invention, dans laquelle sont représentés les 4 plateaux du dispositif (T1, T2, T3 et T4) ainsi que l'ensemble tenon/mortaise en forme de queue d'aronde (Q) permettant aux plateaux T1 et T2 (Q1), T2 et T3 (Q2) et T3 et T4 (Q3) de se déplacer l'un par rapport à l'autre.

On note pour chaque ensemble tenon/mortaise la présence d'une vis micrométrique VM (VM1 pour l'ensemble Q1, VM2 pour l'ensemble Q2 et VM3 pour l'ensemble Q3). Chacune des vis micrométriques VM est maintenue solidaire du plateau qui la porte par une bague B (B1, B2 et B3) elle-même maintenue par une plaquette P (P1, P2, P3), elle-même maintenue par 2 vis V (V1 pour la bague B1, V2 pour la bague B2, V3 pour la bague B3),

On note, visible sur le plateau T2, la vis de blocage (VB2) qui agit sur l'ensemble tenon/mortaise Q2 (les vis de blocage VB1 et VB3 agissant sur les ensembles tenon/mortaise Q1 et Q3 ne sont pas visibles sur la figure).

On note enfin, également visible sur le plateau T2, 2 vis de précontrainte (VP2) qui induisent une précontrainte sur le tenon de l'ensemble tenon/mortaise Q2 (les vis de précontrainte VP1 et VP3 agissant sur les ensembles tenon/mortaise Q1 et Q3 ne sont pas visibles sur la figure).

On note également visible sur le plateau T2 la lame L2 par laquelle la précontrainte et le blocage de l'ensemble tenon/mortaise Q2 s'exerce lorsque la force de précontrainte est induite par les vis de précontrainte VP2 et la force de blocage est induite par la vis de blocage VB2.

Sur la figure 1, le dispositif selon l'invention est maintenu dans un support (S) par l'intermédiaire du plateau T1.

On comprend en regardant la figure 1 que le plateau T2 peut se déplacer par rapport au plateau T1 selon l'axe A1 au moyen de Q1 et VM1, que le plateau T3 peut se déplacer par rapport au plateau T2 selon l'axe A2 au moyen de Q2 et VM2, que le plateau T4 peut se déplacer par rapport au plateau T3 selon l'axe A3 au moyen de Q3 et VM3, chaque axe étant dans un plan perpendiculaire aux plans dans lesquels se trouvent les 2 autres axes.

La figure 2 représente une vue latérale du dispositif selon l'invention de la figure 1, où l'on remarque les 4 plateaux du dispositif (T1, T2, T3 et T4), l'ensemble tenon/mortaise en forme de queue d'aronde permettant au plateau T3 de se déplacer par rapport au plateau T2 (Q2), les vis micrométriques VM1, VM2 et VM3, les bagues B1, B2 et B3, les vis de blocage VB1, VB2 et VB3, les vis de précontrainte VP1 et VP3 (les vis de précontrainte VP2 n'étant pas représentées), les plaquettes P1, P2 et P3. On note la présence de vis V1, V2 et V3 qui servent à maintenir les plaquettes P1, P2 et P3.

On note également la présence de la lame L2, solidaire du plateau T2, par laquelle la précontrainte et le blocage de l'ensemble tenon/mortaise Q2 s'exerce lorsque la force de précontrainte est induite par les vis de précontrainte VP2 (non représentées) et la force de blocage est induite par la vis de blocage VB2.

Sont également représentés le support S et sous le plateau T4 deux moyens de fixation d'un objet (F).

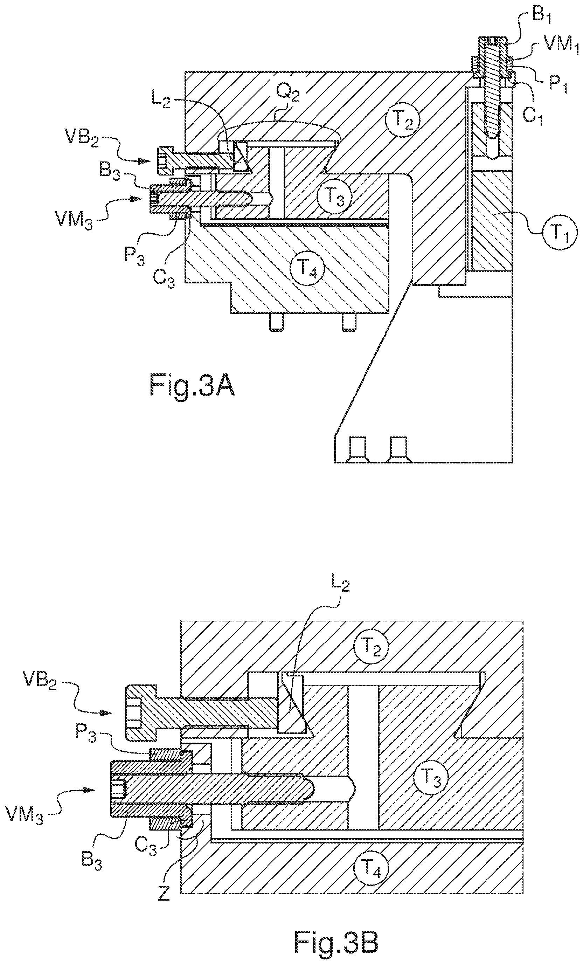

La figure 3A représente une coupe du dispositif selon l'invention où l'on peut voir les plateaux T1, T2, T3 et T4, les vis micrométriques VM1 et VM3, la vis de blocage VB2, l'ensemble tenon/mortaise en forme de queue d'aronde Q2, les bagues B1 et B3, les plaquettes P1 et P3.

On note également la présence de la lame L2, solidaire du plateau T2, par laquelle la précontrainte et le blocage de l'ensemble tenon/mortaise Q2 s'exerce lorsque la force de précontrainte est induite par les vis de précontrainte VP2 (non représentées) et la force de blocage est induite par la vis de blocage VB2.

La figure 3B montre de manière agrandie la vis de blocage VB2 et la vis micrométrique VM3.

On note que la vis de blocage VB2 agit sur la lame L2, solidaire du plateau T2 pour que ladite lame L2 puisse venir en friction du bord biseauté du tenon du plateau T3. C'est ainsi que s'exerce le blocage dans la position désirée de l'ensemble plateau T2/plateau T3.

La vis micrométrique VM3 est solidaire du plateau T4 par la bague B3 dont la base C3 en forme de collerette d'une part s'insère dans un logement de même taille aménagé dans T4 (E), l'ensemble VM3/B3 étant rendu solidaire de T4 par la plaquette P3.

On comprend en regardant la figure 3B qu'un mouvement de rotation de l'ensemble VM3/B3 induit le déplacement du plateau T4 par rapport au plateau T3 par microvissage à l'intérieur dudit plateau T3.

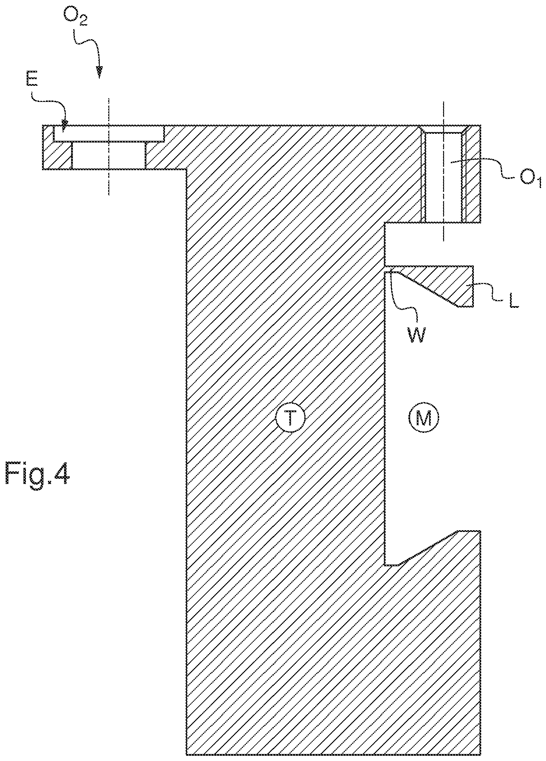

La figure 4 montre une coupe d'un plateau selon un plan perpendiculaire à l'axe de la mortaise porté par ledit plateau.

Sur cette coupe on peut voir le plateau T, la mortaise en forme de queue d'aronde M, la lame L du moyen de précontrainte/blocage solidaire du plateau T par sa base W, l'orifice 01 par lequel passe la vis de blocage venant exercer la force de blocage de l'ensemble tenon/mortaise M par l'intermédiaire de la lame L, l'orifice 02 par lequel passe la vis micrométrique assurant le déplacement du plateau T dans lequel on remarque l'évidement E destiné à recevoir une collerette C d'une bague B solidaire de la vis micrométrique VM traversant l'orifice 02.

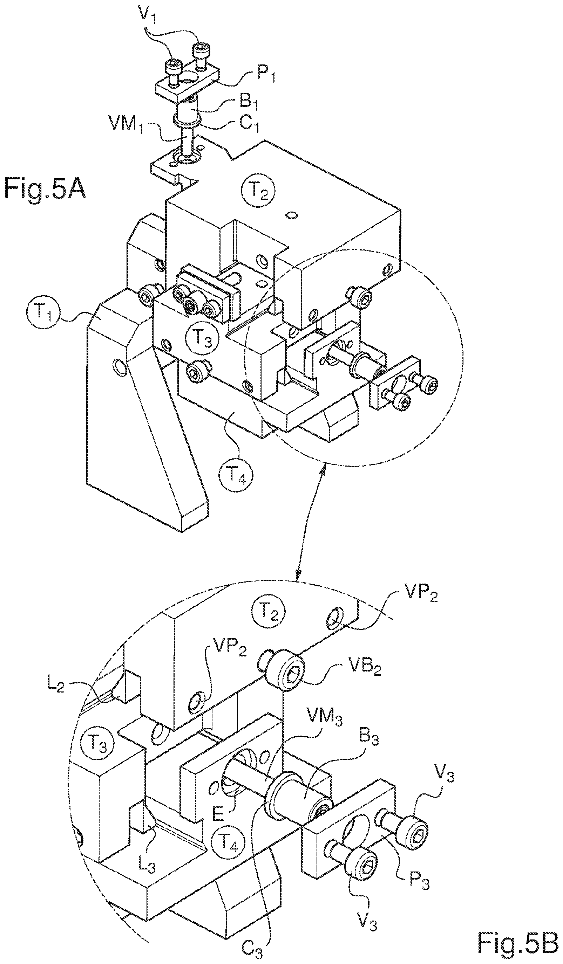

La figure 5 représente une vue éclatée en 3 dimensions d'un dispositif selon l'invention (5A) et un agrandissement (5B) de l'ensemble vis micrométrique (VM), bague (B), plaquette (P) en position sur une paroi latérale d'un plateau T.

La figure 5A montre les plateaux T1, T2, T3 et T4. La figure montre pour le plateau T2, le montage de la vis micrométrique VM1 destinée à mouvoir le plateau T2 par rapport au plateau T1. On note la représentation de la vis micrométrique VM1, de la bague B1 et de sa collerette C1, ainsi que la plaquette P1 destinée à maintenir l'ensemble vis micrométrique VM1, bague B1 et collerette C1 fixé sur le plateau T2 au travers des vis V1.

La figure 5B montre un agrandissement du montage de la vis micrométrique VM3 destinée à mouvoir le plateau T4 par rapport au plateau T3. On note sur le plateau T4 l'évidement E destiné à recevoir la collerette C3 solidaire de la bague B3 enchâssée sur la vis micrométrique VM3. On note également la plaquette P3 destinée à assurer la fixation en prise directe de l'ensemble vis micrométrique VM3, bague B3 et collerette C3 fixé sur le plateau T4 au travers des vis V3.

La figure montre encore les plateaux T2 et T3 ainsi que la vis de blocage VB2 destinée à bloquer en position désirée le plateau T3 par rapport au T2 et l'emplacement des vis de précontrainte VP2 destinée à assurer la précontrainte désirée sur le plateau T3. On note la représentation de la lame L2 sur laquelle agissent les vis de précontrainte VP2 et la vis de blocage VB2 afin de précontraindre et bloquer les mouvements du plateau T3 par rapport au plateau T2. De même la lame L3 sur laquelle agissent les vis de précontrainte VP3 et la vis de blocage VB3 (non représentées) afin de précontraindre et bloquer les mouvements du plateau T4 par rapport au plateau T3.

## Revendications

1. Dispositif de positionnement d'un objet dans l'espace comprenant au moins 4 plateaux (T1, T2, T3, T4), chacun apte à se déplacer par rapport à un autre desdits plateaux qui lui est contigu selon l'un des 3 axes de l'espace, le déplacement d'un plateau par rapport à un autre plateau étant guidé par un ensemble tenon/mortaise (Q1, Q2, Q3) dans lequel ledit tenon est solidaire de l'un des plateaux et sa mortaise est confectionnée dans l'autre plateau, l'orientation dans l'espace de chacun des ensembles tenon/mortaise étant différente des 2 autres et selon l'un des 3 axes de l'espace
**caractérisé en ce que**
▪ Ledit dispositif est exempt de tout ressort de rattrapage
▪ Au moins l'un des ensembles tenon/mortaise est sous la forme de queue d'aronde ; ledit dispositif comprenant de plus
▪ un moyen de précontrainte visant à limiter le déplacement d'un plateau par rapport à un autre, ladite précontrainte étant appliquée latéralement sur l'un des bords du tenon de l'ensemble tenon/mortaise, ladite précontrainte limitant mais n'empêchant pas le déplacement desdits plateaux l'un par rapport à l'autre ;
▪ au moins une vis micrométrique (VM) permettant d'assurer le déplacement d'au moins un plateau par rapport à un autre plateau, ladite vis micrométrique (VM) pouvant agir au moins sur l'un des deux plateaux devant être déplacés l'un par rapport à l'autre, ladite vis micrométrique étant solidaire de l'un desdits deux plateaux, ladite vis micrométrique étant fixée en prise directe sur ledit plateau ;
▪ au moins un moyen de blocage permettant d'assurer, indépendamment pour chacun des ensembles tenon/mortaise, le blocage d'un plateau par rapport à un autre plateau dans la position recherchée.

2. Dispositif selon la revendication 1, **caractérisé en ce que** 2 des ensemble(s) tenon/mortaise, mais très préférentiellement les 3, sont sous la forme de queue d'aronde.

3. Dispositif selon l'une quelconque des revendications 1 ou 2, **caractérisé en ce que** la vis micrométrique (VM) est telle que la rotation d'un tour complet de sa tête déplace son extrémité d'une distance comprise entre 0 et 1000 µm, préférentiellement, entre 0 et 500 µm, très préférentiellement de 200 µm.

4. Dispositif selon l'une quelconque des revendications 1 à 3, **caractérisé en ce que** la vis micrométrique (VM) est rendue solidaire sans jeu du plateau dont elle assure le déplacement par un moyen qui tout en assurant la solidarité entre la vis et le plateau, laisse la vis micrométrique libre de mouvement de rotation.

5. Dispositif selon la revendication 4, **caractérisé en ce que** ledit moyen est composé d'une bague (B) de forme cylindrique enchâssée en force sur l'une des extrémités de ladite vis micrométrique (VM), avantageusement par un montage sous presse, et d'une plaquette (P) de toute forme, avantageusement rectangulaire, présentant un orifice (O) de diamètre correspondant au diamètre extérieur du corps de la bague (B) au travers duquel passe ledit corps de ladite bague, ladite plaquette (P) étant fixée au dit plateau (T) que la vis micrométrique (VM) doit déplacer.

6. Dispositif selon la revendication 5, **caractérisé en ce que** ladite bague (B) présente un corps de diamètre donné et une base solidaire dudit corps présentant un diamètre donné supérieur à celui dudit corps, formant ainsi une collerette (C) autour dudit corps.

7. Dispositif selon l'une quelconque des revendications 1 à 6 **caractérisé en ce que** le déplacement d'un plateau par rapport à un autre est limité sans être empêché par application d'une précontrainte sur le tenon de l'ensemble tenon/mortaise liant lesdits 2 plateaux par ledit moyen de précontrainte.

8. Dispositif selon la revendication 7, **caractérisé en ce que** ledit moyen de précontrainte est l'un des bords de ladite mortaise.

9. Dispositif selon la revendication 8, **caractérisé en ce que** ledit bord de ladite mortaise est sous la forme d'une lame (L) présentant une élasticité latérale, ladite lame étant solidaire du plateau dans laquelle la mortaise dont elle forme un des bords est fraisée.

10. Dispositif selon l'une quelconque des revendications 7 à 9 **caractérisé en ce que** ledit moyen de précontrainte comprend en outre au moins une vis de précontrainte (VP) et une vis de blocage (VB).

11. Dispositif selon l'une quelconque des revendications 7 à 10, **caractérisé en ce que** ledit moyen de précontrainte assure la précontrainte et le blocage du déplacement d'un plateau par rapport à un autre.

## Patentansprüche

1. Vorrichtung zum Positionieren eines Objekts im Raum, die wenigstens 4 Platten (T1, T2, T3, T4) umfasst, die sich jeweils in Bezug auf eine andere der genannten Platten, die ihr benachbart ist, gemäß einer der 3 Achsen des Raums bewegen können, wobei die Bewegung einer Platte mit Bezug auf eine andere Platte durch eine Nut/Zapfen-Baugruppe (Q1, Q2, Q3) geführt wird, in der der genannte Zapfen einstückig mit einer der Platten ist und ihre Nut in die andere Platte eingearbeitet ist, wobei die Orientierung im Raum von jeder der Nut/Zapfen-Baugruppen anders ist als die 2 anderen und gemäß einer der 3 Achsen des Raums,
**dadurch gekennzeichnet, dass**
▪ die genannte Vorrichtung frei von Kompensationsfedern ist,
▪ wenigstens eine der Nut/Zapfen-Baugruppen in Schwalbenschwanzform vorliegt;
wobei die genannte Vorrichtung ferner Folgendes umfasst:
▪ ein Vorspannmittel zum Begrenzen der Bewegung einer Platte mit Bezug auf eine andere, wobei die genannte Vorspannung lateral auf einen der Ränder des Zapfens der Nut/Zapfen-Baugruppe aufgebracht wird, wobei die genannte Vorspannung die Bewegung der genannten Platten mit Bezug aufeinander begrenzt, aber nicht behindert;
▪ wenigstens eine Mikrometerschraube (VM), die das Gewährleisten der Bewegung von wenigstens einer Platte in Bezug auf eine andere Platte zulässt, wobei die genannte Mikrometerschraube (VM) wenigstens auf eine der zwei Platten wirken kann, bevor sie in Bezug zueinander bewegt werden, wobei die genannte Mikrometerschraube einstückig mit einer der genannten beiden Platten ist, wobei die genannte Mikrometerschraube unmittelbar an der genannten Platte befestigt ist;
▪ wenigstens ein Sperrmittel, das das Gewährleisten des Sperrens einer Platte mit Bezug auf eine andere Platte in der gewünschten Position unabhängig für jede der Nut/Zapfen-Baugruppen zulässt.

2. Vorrichtung nach Anspruch 1, **dadurch gekennzeichnet, dass** 2 der Nut/Zapfen-Baugruppen, aber stark bevorzugt 3, in Schwalbenschwanzform vorliegen.

3. Vorrichtung nach Anspruch 1 oder 2, **dadurch gekennzeichnet, dass** die Mikrometerschraube (VM) derart ist, dass eine Rotation ihres Kopfs um eine volle Umdrehung ihr Ende um eine Distanz zwischen 0 und 1000 µm, vorzugsweise zwischen 0 und 500 µm, stark bevorzugt von 200 µm bewegt.

4. Vorrichtung nach einem der Ansprüche 1 bis 3, **dadurch gekennzeichnet, dass** die Mikrometerschraube (VM) einstückig und spielfrei mit der Platte gemacht wird, deren Bewegung sie gewährleisten soll, mit einem Mittel, das die Einstückigkeit zwischen der Schraube und der Platte gewährleistet, wobei sich die Mikrometerschraube frei drehen kann.

5. Vorrichtung nach Anspruch 4, **dadurch gekennzeichnet, dass** sich das genannte Mittel zusammensetzt aus einem zylindrischen Ring (B), der an einem der Enden der genannten Mikrometerschraube (VM) eingepresst ist, vorteilhafterweise durch eine Pressmontage, und einer Scheibe (P) einer beliebigen Form, vorteilhafterweise rechteckig, mit einer Öffnung (O) mit einem Durchmesser entsprechend dem Außendurchmesser des Körpers des Rings (B), durch den der genannte Körper des genannten Rings passiert, wobei die genannte Scheibe (P) an der genannten Platte (T) befestigt ist, die die Mikrometerschraube (VM) bewegen soll.

6. Vorrichtung nach Anspruch 5, **dadurch gekennzeichnet, dass** der genannte Ring (B) einen Körper mit einem gegebenen Durchmesser und einer Basis einstückig mit dem genannten Körper aufweist, mit einem gegebenen Durchmesser, der größer ist als der des genannten Körpers, so dass ein Kragen (C) um den genannten Körper entsteht.

7. Vorrichtung nach einem der Ansprüche 1 bis 6, **dadurch gekennzeichnet, dass** die Bewegung einer Platte mit Bezug auf eine andere durch Beaufschlagen des Zapfens der die genannten 2 Platten verbindenden Nut/Zapfen-Baugruppe mit einer Vorspannung durch das genannte Vorspannmittel begrenzt, aber nicht behindert wird.

8. Vorrichtung nach Anspruch 7, **dadurch gekennzeichnet, dass** das genannte Vorspannmittel einer der Ränder der genannten Nut ist.

9. Vorrichtung nach Anspruch 8, **dadurch gekennzeichnet, dass** der genannte Rand der genannten Nut in Form einer Lamelle (L) vorliegt, die eine laterale Elastizität aufweist, wobei die genannte Lamelle einstückig mit der Platte ist, in die die Nut, von der sie einen der Ränder bildet, eingefräst ist.

10. Vorrichtung nach einem der Ansprüche 7 bis 9, **dadurch gekennzeichnet, dass** das genannte Vorspannmittel ferner wenigstens eine Vorspannschraube (VP) und eine Sperrschraube (VB) umfasst.

11. Vorrichtung nach einem der Ansprüche 7 bis 10, **dadurch gekennzeichnet, dass** das genannte Vorspannmittel das Vorspannen und das Sperren der Bewegung einer Platte mit Bezug auf eine andere gewährleistet.

## Claims

1. Device for positioning an object in space comprising at least 4 plates (T1, T2, T3, T4), each capable of moving with respect to another of said plates that is adjacent to it along one of the 3 axes of the space, the movement of one plate with respect to another plate being guided by a tenon/mortise assembly (Q1, Q2, Q3) in which said tenon is integral with one of the plates and its mortise is formed in the other plate, the orientation in space of each of the tenon/mortise assemblies being different from the other 2 and along one of the 3 axes of space,
**characterized in that**
▪ said device is free of any compensating spring
▪ at least one of the tenon/mortise assemblies is in the form of a dovetail;
said device comprising in addition
▪ a preload means intended to limit the movement of one plate with respect to another, said preload being applied laterally on one of the edges of the tenon of the tenon/mortise assembly, said preload limiting but not preventing the movement of said plates with respect to one another;
▪ at least one micrometer screw (VM) making it possible to ensure the movement of at least one plate with respect to another plate, said micrometer screw (VM) being capable of acting at least on one of the two plates to be moved with respect to one another, said micrometer screw being integral with one of said two plates, said micrometer screw being fixed directly engaging on said plate;
▪ at least one locking means making it possible to ensure, independently for each of the tenon/mortise assemblies, that one plate is locked in the desired position with respect to another plate.

2. Device according to claim 1, **characterized in that** 2 of the tenon/mortise assemblies, but very preferably all 3, are in the form of a dovetail.

3. Device according to either one of claims 1 or 2, **characterized in that** the micrometer screw (VM) is such that one complete rotation of its head moves its end by a distance comprised between 0 and 1000 µm, preferably between 0 and 500 µm, very preferably 200 µm.

4. Device according to any one of claims 1 to 3, **characterized in that** the micrometer screw (VM) is made integral, without play, with the plate of which it ensures the movement, by a means which, while ensuring that the screw and the plate are integral with one another, allows the micrometer screw to move freely in rotation.

5. Device according to claim 4, **characterized in that** said means is composed of a cylindrical-shaped ring (B) force-fitted onto one of the ends of said micrometer screw (VM), advantageously by press-mounting, and of a bracket (P) of any shape, advantageously rectangular, having an orifice (O) of a diameter corresponding to the outside diameter of the body of the ring (B) through which said body of said ring passes, said bracket (P) being fixed to said plate (T) that the micrometer screw (VM) is to move.

6. Device according to claim 5, **characterized in that** said ring (B) has a body of a given diameter and a base integral with said body having a given diameter greater than that of said body, thus forming a flange (C) around said body.

7. Device according to any one of claims 1 to 6, **characterized in that** the movement of one plate with respect to another is limited without being prevented by application of a preload on the tenon of the tenon/mortise assembly connecting said 2 plates by said preload means.

8. Device according to claim 7, **characterized in that** said preload means is one of the edges of said mortise.

9. Device according to claim 8, **characterized in that** said edge of said mortise is in the form of a blade (L) having lateral elasticity, said blade being integral with the plate in which the mortise of which it forms one of the edges is milled.

10. Device according to any one of claims 7 to 9, **characterized in that** said preload means comprises moreover at least one preload screw (VP) and one locking screw (VB).

11. Device according to any one of claims 7 to 10, **characterized in that** said preload means ensures the preload and the locking of the movement of one plate with respect to another.
